(19) Europäisches Patentamt
European Patent Office
Office européen des brevets

(11) **EP 2 505 974 B1**

(12) **EUROPÄISCHE PATENTSCHRIFT**

(45) Veröffentlichungstag und Bekanntmachung des Hinweises auf die Patenterteilung:
**10.08.2022   Patentblatt 2022/32**

(21) Anmeldenummer: **11165481.0**

(22) Anmeldetag: **10.05.2011**

(51) Internationale Patentklassifikation (IPC):
*G01J 3/52* *(2006.01)*        *G01J 3/46* *(2006.01)*

(52) Gemeinsame Patentklassifikation (CPC):
**G01J 3/524; G01J 3/462; G01J 3/465**

(54) **Farbmessgerätkalibrierung**

Calibration of a colour measuring device

Calibrage d'un colorimètre

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.04.2011   US 201113078291**

(43) Veröffentlichungstag der Anmeldung:
**03.10.2012   Patentblatt 2012/40**

(73) Patentinhaber: **X-Rite Switzerland GmbH**
**8105 Regensdorf (CH)**

(72) Erfinder:
• **Lianza, Thomas A.**
**Bedford, NH 03110 (US)**
• **Masia, Andrew**
**Newburyport, MA 01950 (US)**
• **Zhou, Wang-Long**
**Andover, MA 01810 (US)**
• **Federico, Richard**
**Reading, MA 01867 (US)**
• **Frick, Beat**
**8107 Buchs (CH)**

(74) Vertreter: **Jonas, Hans-Hermann**
**X-Rite Europe GmbH**
**Althardstrasse 70**
**8105 Regensdorf (CH)**

(56) Entgegenhaltungen:
**US-A- 3 804 531      US-A1- 2009 141 042**

• **KOSZTYAN Z T ET AL: "Matrix-based color measurement corrections of tristimulus colorimeters", APPLIED OPTICS, OPTICAL SOCIETY OF AMERICA, WASHINGTON, DC; US, Bd. 49, Nr. 12, 20. April 2010 (2010-04-20), Seiten 2288-2301, XP001553182, ISSN: 0003-6935**

**Beschreibung**

Die Erfindung betrifft ein Verfahren zur Kalibrierung eines Filterfarbmessgeräts gemäss dem Oberbegriff des unabhängigen Anspruchs 1.

Farbmessgeräte lassen sich aufgrund der eingesetzten Messtechnologien im Wesentlichen in zwei Klassen einteilen: Spektralmessgeräte und Filtermessgeräte. Spektralmessgeräte sind am universellsten, da aus Spektralmesswerten bekanntlich alle anderen in der Praxis interessierenden Grössen (z.B. Farbwerte, Farbdichtewerte etc.) ableitbar sind. Filtermessgeräte sind weniger universell, dafür aber konstruktiv weniger aufwändig und entsprechend kostengünstiger. Unabhängig von der zugrundeliegenden Messtechnologie können Farbmessgeräte als autonome Geräte oder als Messperipherie zum Einsatz in Verbindung mit einem steuernden und Messdaten auswertenden Rechner ausgebildet sein. Autonome Farbmessgeräte enthalten alle für den Messbetrieb erforderlichen Bedienungs- und Anzeigeorgane sowie eine eigene Stromversorgung und sind darüber hinaus vielfach auch noch mit einer Schnittstelle zur Kommunikation mit einem Rechner ausgestattet, wobei mit dem Rechner sowohl Messdaten als auch Steuerungsdaten ausgetauscht werden können. Als Messperipherie ausgelegte Farbmessgeräte haben in der Regel keine eigenen Bedienungs- und Anzeigeorgane und werden - wie jedes andere Rechnerperipheriegerät - vom übergeordneten Rechner gesteuert. Zur Kommunikation mit einem Rechner sind modernere Farbmessgeräte oft z.B. mit einer sog. USB-Schnittstelle (Universal Serial Bus) ausgerüstet, über welche in vielen Fällen gleichzeitig auch die Stromversorgung (vom angeschlossenen Rechner aus) erfolgen kann. Ein solches Messgerätekonzept ist z.B. in US-PS Nr. 7 671 991 (≈ EP 1 845 350 B1) beschrieben.

Farbmessgeräte sind je nach Ausbildung und Zubehör für viele Messaufgaben einsetzbar. Ein spezielles Einsatzgebiet von Farbmessgeräten ist die Messung an Monitoren, speziell zum Zwecke der Kalibration und zur Erstellung von Farbprofilen. Das Farbmessgerät wird dabei manuell an dem zu messenden Monitor positioniert, wobei es den Monitor berührt oder in einem kleinen Abstand (vorzugsweise weniger als 20cm) vom Monitor angeordnet ist. Ferner können Farbmessgeräte in weiteren Anwendungsfunktionen auch zur Messung des Umgebungslichts oder ev. auch für (Fern-)Messungen an einer Projektionsfläche verwendet werden, welche z.B. von einem elektronischen Projektor (Beamer) beleuchtet wird. Diese Punkte sind ebenfalls z.B. in US-PS Nr. 7 671 991 (≈ EP 1 845 350 B1) beschrieben.

Die vorliegende Erfindung befasst sich ausschliesslich mit Filterfarbmessgeräten. Solche Filterfarbmessgeräte besitzen eine Optik, welche empfangenes Messlicht über drei oder mehrere Farbfilter unterschiedlicher spektraler Durchlässigkeiten auf entsprechende photoelektrische Sensoren lenkt, die das sie beaufschlagende Licht in entsprechende Messsignale umwandelt. Die Anzahl unterschiedlicher Farbfilter und zugehöriger Sensoren bestimmt die Anzahl der sog. Farbkanäle des Farbmessgeräts.

Für eine genaue Farbmessung soll das Farbmessgerät Messwerte liefern können, die den Bewertungs-Spektren (Color Matching Funktionen) CMF des Standard-Beobachters nach CIE 1931 entsprechen. Mit realen Farbfiltern und den zugehörigen Sensoren lassen sich die genannten Bewertungs-Spektren (Color Matching Funktionen) jedoch nicht oder zumindest nicht mit vertretbarem konstruktiven Aufwand exakt nachbilden, so dass die von einem solchen Filterfarbmessgerät erzeugten Messdaten praktisch nur mehr oder weniger gute Annäherungen an die genormten Tristimulus-Farbwerte X, Y, Z sind. Die Messdaten bedürfen daher einer Aufbereitung, bei welcher die Ausgangssignale der einzelnen Farbkanäle des Farbmessgeräts mit einer gerätespezifischen Kalibrationsmatrix transformiert (multipliziert) werden. Die Elemente der Kalibrationsmatrix sind dabei so gewählt, dass das Ergebnis der Transformation bzw. Matrixmultiplikation möglichst genau den genormten Tristimulus-Farbwerten entspricht.

Im Folgenden wird als Kalibrierung des Farbmessgeräts bzw. Kalibrierverfahren für das Farbmessgerät die Bestimmung der genannten Kalibrationsmatrix verstanden.

Herkömmlich erfolgt die Kalibrierung eines Filterfarbmessgeräts anhand von Vergleichsmessungen mit einem (als hochpräzis vorausgesetzten) Referenz-Tristimulus-Farbmessgerät. Eine einstellbare Lichtquelle, z.B. ein von einem Rechner angesteuerter Monitor, erzeugt eine Reihe von f Farbflecken, die gleichzeitig oder nacheinander sowohl mit dem zu kalibrierenden Filterfarbmessgerät als auch mit dem Referenzfarbmessgerät ausgemessen werden. Das zu kalibrierende Filterfarbmessgerät erzeugt dabei f Sätze von je n Farbkanal-Ausgangswerten [C] = $C_{1,1}$..... $C_{f,n}$ und das Referenzfarbmessgerät erzeugt entsprechend f Sätze von Tristimulus-Farbwerten [T] = $X_1$ .. $X_f$, $Y_1$ ... $Y_f$, $Z_1$ ... $Z_f$. Diese Werte werden in eine Matrizengleichung [C] = [M]*[T] eingesetzt, wobei [M] die gesuchte Kalibrationsmatrix ist und die Dimension 3*n aufweist. Die Anzahl f der ausgemessenen Farbflecken muss mindestens 3 sein, ist aber üblicherweise grösser. Die Matrizengleichung wird dann nach [M] aufgelöst. Im Falle von f > 3 wird die Gleichung nach der Methode des kleinsten quadratischen Fehlers aufgelöst. Im Falle von f = 3 wird die Lösung direkt gefunden. Anschliessend kann die Kalibrationsmatrix [M] entweder im Filterfarbmessgerät selbst oder in einem externen Rechner abgespeichert und zur Transformation der Farbkanalausgangswerte des Filterfarbmessgeräts in Tristimulus-Farbwerte herangezogen werden.

Dieses bekannte Kalibrierverfahren hat zwei entscheidende Nachteile. Einerseits erfordert sie eine gut unterhaltene (stabile und konstante) Lichtquelle und ein entsprechend gut unterhaltenes Referenzfarbmessgerät, weil andernfalls die Wiederholbarkeit der Kalibrierung signifikant reduziert werden könnte. Da anderseits die auf diese Weise bestimmte Kalibrationsmatrix [M] nur das Optimum (best fit) bezüglich der bei der Kalibrierung verwendeten f Farbflecken der Lichtquelle darstellt, können bei Messanwendungen an anderen Lichtquellen signifikante Fehler entstehen.

Durch die vorliegende Erfindung sollen nun diese Nachteile bei einem Kalibrierverfahren für ein Filterfarbmessgerät vermieden werden.

US 2009/0141042 A1 offenbart ein Verfahren zur Kalibrierung eines Farbmessgeräts zur Vermessung eines Displays. Spektrale Sensitivitäten von mindestens vier Farbkanälen des Farbmessgeräts werden bestimmt. Diese spektralen Sensitivitäten werden mit einer linearen Regression an CIE-Bewertungsfunktionen verknüpft. Mit dem zu kalibrierenden Farbmessgerät und mit einem Referenz-Farbmessgerät werden CIE-Tristimuluswerte von Testfarben auf dem Display gemessen. Die CIE-Tristimuluswerte, die mit dem zu kalibrierenden Farbmessgerät gemessen wurden, werden mit einer nichtlinearen Fitfunktion in CIE- Tristimuluswerte, wie sie mit dem Referenz-Farbmessgerät gemessen worden wären, transformiert. Fitkoeffizienten der Fitfunktion werden abgespeichert.

Zsolt T. Kosztyän et al., "Matrix-based color measurement corrections of tristimulus colorimeters", Applied Optics, Vol. 49, No. 12 (2010), pp. 2288-2301 offenbart matrixbasierte Verfahren zur Kalibration eines Farbmessgeräts.

US 3,804,531 offenbart Kalibrationsverfahren für ein analoges Farbmessgerät. Zur Kalibration dienen analoge Matrix-Schaltkreise, zwischen denen abhängig vom zu vermessenden Display umgeschaltet wird.

Diese der Erfindung zugrundeliegende Aufgabe wird durch das durch die Merkmale des unabhängigen Anspruchs 1 gekennzeichnete erfindungsgemässe Kalibrierverfahren gelöst. Vorteilhafte Ausgestaltungen und Weiterbildungen des erfindungsgemässen Kalibrierverfahrens sind Gegenstand der abhängigen Ansprüche.

Das Wesen der Erfindung besteht in Folgendem: Bei einem Kalibrierverfahren für ein Filterfarbmessgerät mit mindestens drei Farbkanälen wird eine Kalibrationsmatrix zur Transformation von Ausgangssignalen der Farbkanäle in Tristimulus-Farbwerte gebildet. Die Kalibrierung erfolgt spektral, indem die spektralen Sensitivitäten der Farbkanäle des Farbmessgeräts gemessen und abgespeichert werden und indem die Kalibrationsmatrix aus den spektralen Sensitivitäten und den spektralen Bewertungsfunktionen eines Standard-Beobachters, vorzugsweise des Standard-Beobachters nach CIE 1931 berechnet wird. Durch die spektrale Kalibrierung wird eine bessere Annäherung an die Bewertungsfunktionen (Color Matching Funktionen) nach CIE ermöglicht. Die spektralen Sensitivitäten sind dabei die Verhältnisse der mit dem Farbmessgerät und einem Referenz-Spektralphotometer gemessenen Messwerte für jeweils dieselbe Wellenlänge.

Im Rahmen des erfindungsgemässen Verfahrens wird ein Emissions-Spektrum einer Ziel-Lichtquelle mit dem Referenz-Spektralphotometer gemessen und abgespeichert, und dieses Emissions-Spektrum wird in die Berechnung der Kalibrierungsmatrix mit einbezogen. Durch die Miteinbeziehung der Ziel-Lichtquelle können Lichtquellenbedingte Messfehler verringert werden.

Die Kalibrationsmatrix wird dabei durch Auflösung der Matrizengleichung

$$P * S * CM = P * CMF$$

nach den Elementen der Kalibrationsmatrix berechnet, worin P eine Matrix ist, deren Elemente die einzelnen Spektralwerte der Emissions-Spektren der Ziel-Lichtquelle für verschiedene Farben derselben sind, wobei S eine Matrix ist, deren Elemente die einzelnen Spektralwerte der spektralen Sensitivitäten der Farbkanäle des Farbmessgeräts sind, und wobei CMF eine Matrix ist, deren Elemente die einzelnen Spektralwerte der spektralen Bewertungsfunktionen des Standard-Beobachters, vorzugsweise des Standard-Beobachters nach CIE 1931 oder eines anderen, ähnlichen Standards sind. Dies ist im Normalfall ein überbestimmtes Gleichungssystem, das sich z.B. nach der bekannten Methode des kleinsten quadratischen Fehlers auflösen lässt.

Im Rahmen der Erfindung werden die Emissions-Spektren einer Vielzahl von Ziel-Lichtquellen gemessen und in einer Datenbank in Zuordnung zu einer Modellund/oder Typ-Information der vermessenen Ziel-Lichtquellen abgespeichert. Der Rechner identifiziert die zu messende Ziel-Lichtquelle selbst, sodass aus der Datenbank ein dem Modell oder dem Typ der konkreten Ziel-Lichtquelle entsprechendes Emissions-Spektrum ausgewählt und für die Berechnung der Kalibrationsmatrix verwendet wird. Dieses Vorgehen erlaubt die Bereitstellung einer grossen Zahl von Emissions-Spektren für alle möglichen Ziel-Lichtquellen sowie die einfache Ergänzung und Aktualisierung der Datenbank durch Hinzufügung von Emissions-Spektren neuer Ziel-Lichtquellen bzw. durch Aktualisierung vorhandener Emissions-Spektren.

Gemäss einer vorteilhaften Weiterbildung des erfindungsgemässen Verfahrens werden für verschiedene Ziel-Lichtquellen desselben Typs Emissions-Spektren gemessen und abgespeichert. Aus diesen Emissions-Spektren wird ein kombiniertes Emissions-Spektrum gebildet und anhand dieses kombinierten Emissions-Spektrums wird eine Typ-spezifische Kalibrationsmatrix berechnet. Dieses Vorgehen hat den Vorteil, dass nicht für jedes Ziel-Lichtquellen-Modell ein eigenes Emissions-Spektrum gemessen und abgespeichert werden muss.

Die Typ-spezifische Kalibrationsmatrix wird dabei vorteilhafterweise durch Auflösung der Matrizengleichung

$$PK * S * CM_t = PK * CMF$$

nach den Elementen der Typ-spezifischen Kalibrationsmatrix berechnet wird, worin PK eine Matrix ist, deren Elemente die einzelnen Spektralwerte der Emissions-Spektren der einzelnen Ziel-Lichtquellen desselben Typs je für verschiedene Farben derselben sind, wobei S eine Matrix ist, deren Elemente die einzelnen Spektralwerte der spektralen Sensitivitäten der Farbkanäle des Farbmessgeräts sind, und wobei CMF eine Matrix ist, deren Elemente die einzelnen Spektralwerte der spektralen Bewertungsfunktionen des Standard-Beobachters, vorzugsweise des Standard-Beobachters nach CIE 1931 sind.

In einem alternativen Verfahren, das nicht von den Ansprüchen umfasst ist, wird eine generische Kalibrationsmatrix durch Auflösung der Matrizengleichung

$$S * CM_g = CMF$$

nach den Elementen der generischen Kalibrationsmatrix berechnet, wobei S eine Matrix ist, deren Elemente die einzelnen Spektralwerte der spektralen Sensitivitäten der Farbkanäle des Farbmessgeräts sind, und wobei CMF eine Matrix ist, deren Elemente die einzelnen Spektralwerte der spektralen Bewertungsfunktionen des Standard-Beobachters, vorzugsweise des Standard-Beobachters nach CIE 1931 oder eines anderen, ähnlichen Standards sind. Eine generische Kalibrationsmatrix ist dann von Vorteil, wenn für die Ziel-Lichtquelle kein geeignetes Emissions-Spektrum vorhanden ist.

Gemäss einem wichtigen Gedanken der Erfindung wird die Kalibrationsmatrix jeweils unmittelbar vor dem Mess-Einsatz des Farbmessgeräts neu berechnet. Dies hat den Vorteil, dass die Kalibrierung stets aktuell und auf die Ziel-Lichtquelle abgestimmt ist.

Bevorzugterweise werden die spektralen Sensitivitäten der Farbkanäle des Farbmessgeräts in einem nicht-flüchtigen Speicher des Farbmessgeräts selbst oder in einer Datenbank in Zuordnung zu Identifikationsdaten des Farbmessgeräts gespeichert und für die Berechnung der Kalibrationsmatrix aus dem Speicher bzw. aus der Datenbank ausgelesen. Dies hat den Vorteil, dass die spektralen Sensitivitäten des Farbmessgeräts bereits herstellerseitig gemessen und dem Anwender auf einfache Weise zur Verfügung gestellt werden können.

Im Folgenden wird die Erfindung anhand der Zeichnung näher erläutert. Es zeigen:

Fig. 1    eine schematische Ansicht eines Filterfarbmessgeräts in Verbindung mit einem externen Rechner,

Fig. 2    ein Schema einer Messkonfiguration und der Verfahrensschritte zur spektralen Charakterisierung des Filterfarbmessgeräts,

Fig. 3    ein Schema einer Messkonfiguration und der Verfahrensschritte zur spektralen Charakterisierung eines Monitors,

Fig. 4    ein Schema der Verfahrensschritte zur Berechnung einer Kalibrationsmatrix und

Fig. 5    eine schematische Ansicht der Abläufe bei einer praktischen Messanwendung des Filterfarbmessgeräts.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen. Unter dem verkürzten Begriff "Farbmessgerät" wird immer ein Filterfarbmessgerät verstanden. Unter "Ziel-Lichtquelle" wird eine Lichtquelle verstanden, für welche die Kalibrierung des Farbmessgeräts erfolgt. Ziel-Lichtquellen können beliebiger Art sein, insbesondere Monitore, TV-Geräte, Anzeigegeräte jeglichen Typs, elektronische Projektoren etc.

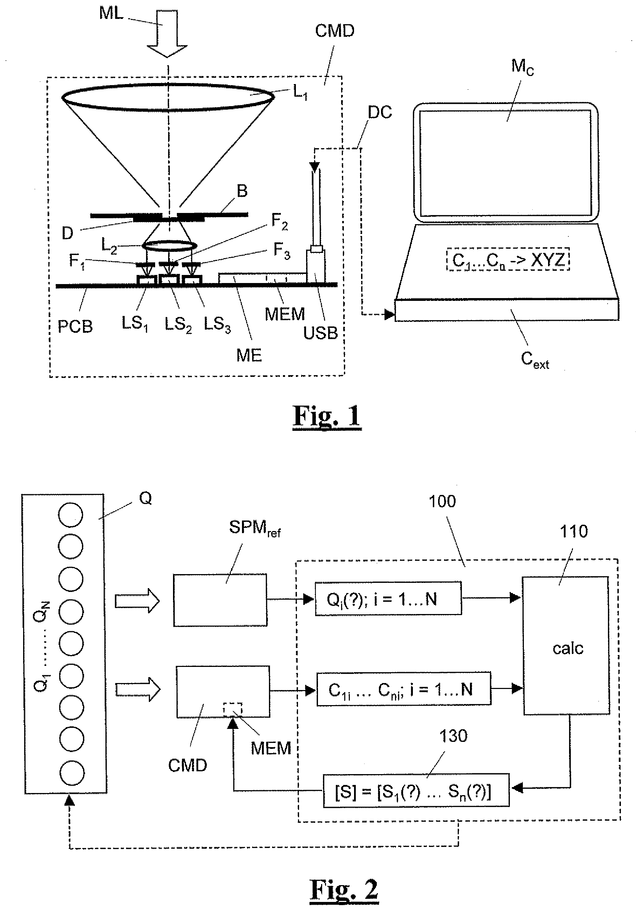

Das in Fig. 1 dargestellte Farbmessgerät ist als Ganzes mit CMD (Color Measuring Device) bezeichnet und hier als beispielsweise dreikanaliges Filterfarbmessgerät ausgelegt. Es umfasst eine Eingangslinse $L_1$, eine Blende B, einen Diffusor D, eine Sensor-Linse $L_2$, drei Farbfilter $F_1$, $F_2$, $F_3$ mit unterschiedlichen spektralen Durchlässigkeiten und drei photoelektrische Sensoren $LS_1$, $LS_2$, $LS_3$, welche auf einer Leiterplatte PCB angeordnet sind. Auf der Leiterplatte befindet sich eine digitale Messelektronik ME, die ihrerseits einen nicht-flüchtigen Speicher MEM sowie eine Kommunikationsschnittstelle USB aufweist.

Das Farbmessgerät CMD ist über ein an die Kommunikationsschnittstelle USB angeschlossenes Kabel DC mit einem externen Rechner $C_{ext}$ mit einem zugehörigen Monitor $M_C$ verbunden und wird auch über das Kabel DC vom externen Rechner $C_{ext}$ mit Strom versorgt.

In das Farbmessgerät CMD durch die Eingangslinse $L_1$ eintretendes Messlicht ML beaufschlagt nach Durchgang durch die Blende B, den Diffusor D, die Sensor-Linse $L_2$ und die Farbfilter $F_1$, $F_2$, $F_3$ die drei Sensoren $LS_1$, $LS_2$,

LS$_3$. Letztere erzeugen entsprechende elektrische Messsignale, die von der Messelektronik ME in digitaler Form an der Kommunikationsschnittstelle USB zur Verfügung gestellt werden.

Die Ansteuerung der Sensoren LS$_1$, LS$_2$, LS$_3$ durch die Messelektronik ME und die Bereitstellung der digitalen Messsignale an der Kommunikationsschnittstelle USB sowie die Zuführung der digitalen Messsignale zum externen Rechner C$_{ext}$ erfolgen konventionell (z.B. wie in der US-PS Nr. 7 671 991 beschrieben) und bedürfen deshalb keiner detaillierteren Erläuterung.

Im dargestellten Beispiel ist das Farbmessgerät CMD für drei Farbkanäle ausgelegt. Es versteht sich, dass das Farbmessgerät CMD auch mit mehr als drei, beispielsweise sechs Farbkanälen ausgestattet sein kann, wobei dann entsprechend mehr Farbfilter mit unterschiedlicher Durchlass-Charakteristik und entsprechend mehr Sensoren vorgesehen wären. Im Folgenden sind die digitalen Messsignale (Ausgangssignale) der allgemein n Farbkanäle des Farbmessgeräts CMD mit C$_1$, C$_2$ .... C$_n$ bezeichnet. (Im dargestellten Beispiel gilt n = 3.)

Das Farbmessgerät CMD selbst ist soweit konventionell und bedarf daher für den Fachmann keiner näheren Erläuterung. Die vorliegende Erfindung beschäftigt sich ausschliesslich mit der Kalibrierung des Farbmessgeräts, die unter Zuhilfenahme eines Spektralphotometers und einer einstellbaren Lichtquelle mittels eines oder mehrerer separaten Rechners bzw. Rechner durchgeführt wird.

Das erfindungsgemässe Kalibrierverfahren gliedert sich in drei Abschnitte. In einem ersten Abschnitt wird eine spektrale Charakterisierung des zu kalibrierenden Farbmessgeräts CMD vorgenommen. In einem zweiten Abschnitt wird eine spektrale Charakterisierung von verschiedenen Lichtquellen, zu deren Ausmessung das Farbmessgerät später eingesetzt werden soll, durchgeführt. Und in einem dritten Abschnitt wird aus den Ergebnissen der beiden anderen Abschnitte eine Kalibrationsmatrix berechnet, die dann beim praktischen Messeinsatz des Farbmessgeräts zur Transformation der Farbkanalausgangswerte in Tristimulus-Farbwerte herangezogen wird.

Unter der im ersten Abschnitt vorgenommenen spektralen Charakterisierung des zu kalibrierenden Farbmessgeräts CMD ist die Bestimmung der spektralen Sensitivitäten der Farbkanäle des Farbmessgeräts zu verstehen. Die spektralen Sensitivitäten sind - für jede Wellenlänge - die Verhältnisse der mit dem Farbmessgerät CMD und mit einem hochpräzisen Referenz-Spektralphotometer gemessenen Messwerte, jeweils für dieselbe Wellenlänge. Zur Bestimmung dieser Messwert-Verhältnisse kann z.B. ein durchstimmbarer Monochromator herangezogen werden, dessen Ausgangslicht für jede einzelne Wellenlänge mit dem Farbmessgerät und dem Referenz-Spektralphotometer gemessen wird. Eine andere Implementierung der Bestimmung der Sensitivitäten ist in Fig. 2 schematisch dargestellt. Mittels einer einstellbaren Lichtquelle Q, die z.B. durch eine mit entsprechenden Leuchtmitteln und ggf. Farbfiltern ausgestattete Ulbricht-Kugel gebildet sein kann, wird sequentiell Licht unterschiedlicher Farbe (unterschiedliche Spektralbänder) erzeugt und sowohl mit dem zu kalibrierenden Farbmessgerät CMD als auch spektral mit einem hochpräzisen Referenz-Spektralphotometer SPM$_{ref}$ ausgemessen. Die insgesamt N unterschiedlichen Lichtfarben sind in der Fig. 2 durch Kreise Q$_1$ ... Q$_N$ symbolisiert. Bei der Ausmessung mit dem Farbmessgerät CMD entstehen N Sätze von je n Farbkanalausgangswerten C$_{1,1}$..... .... C$_{n,N}$, die einem Rechner 100 zugeführt werden. Entsprechend liefert das Referenz-Spektralphotometer SPM$_{ref}$ N Spektren Qi($\lambda$), die ebenfalls dem Rechner 100 zugeführt werden. Auf dem Rechner 100 läuft ein Programm 110, welches die N*n Farbkanalausgangswerten C$_{1,1}$..... .... C$_{n,N}$ und die N Spektren Qi($\lambda$) miteinander verknüpft und daraus die spektralen Sensitivitäten S = [S$_1$($\lambda$) ... S$_n$($\lambda$)] der n Farbkanäle des Farbmessgeräts CMD berechnet. Diese spektralen Sensitivitäten S werden dann im nicht-flüchtigen Speicher MEM in der Messelektronik des Farbmessgeräts CMD gespeichert und sind für jedes zu kalibrierende Farbmessgerät gerätespezifisch. Der Wellenlängenbereich erstreckt sich typisch von 400 - 700 nm. Die spektrale Auflösung der Charakterisierung kann sehr hoch sein, z.B. etwa 1 nm. Der Rechner 100 kann auch die Steuerung der Lichtquelle Q übernehmen.

Falls die totale Anzahl von Spektralwerten grösser als N ist, kann die Berechnung der Sensitivitäten S durch das Programm 110 die Berechnung der Schwerpunkte der Spektren Qi($\lambda$) sowie Interpolation, Optimierung oder andere Kurvenanpassungstechniken erfordern, um die einzelnen Sensitivitätswerte zwischen den Schwerpunktspositionen der Spektren Qi($\lambda$) zu bestimmen. Solche Techniken sind dem Fachmann bekannt und bedürfen daher keiner näheren Erläuterung.

Die Charakterisierung des Farbmessgeräts CMD erfolgt typischerweise beim Gerätehersteller. Die spektralen Sensitivitäten S können natürlich auch zusammen mit einer Identifikationsinformation für das Farbmessgerät CMD in einer Datenbank gespeichert und aus dieser bei Bedarf abgerufen werden.

Wie schon eingangs erwähnt, ist ein Hauptanwendungsgebiet solcher Farbmessgeräte die Messung an Monitoren, speziell zum Zwecke der Kalibration und zur Erstellung von Farbprofilen. Monitore sind je nach zugrundeliegender Technologie, Fabrikat und Typ als unterschiedliche Lichtquellen mit teilweise sehr unterschiedlichen spektralen Charakteristiken zu sehen. Ein für eine spezifische Lichtquelle (Monitor eines bestimmten Typs) kalibriertes Farbmessgerät kann daher bei Messungen an einer anderen Lichtquelle (Monitor eines anderen Typs) durchaus signifikant fehlerhafte Messresultate liefern. Um dieses Problem zu eliminieren, werden im zweiten Abschnitt des erfindungsgemässen Kalibrierverfahrens die repräsentativsten Lichtquellen (z.B. Monitore), die mit dem Farbmessgerät CMD auszumessen sind, ebenfalls spektral charakterisiert.

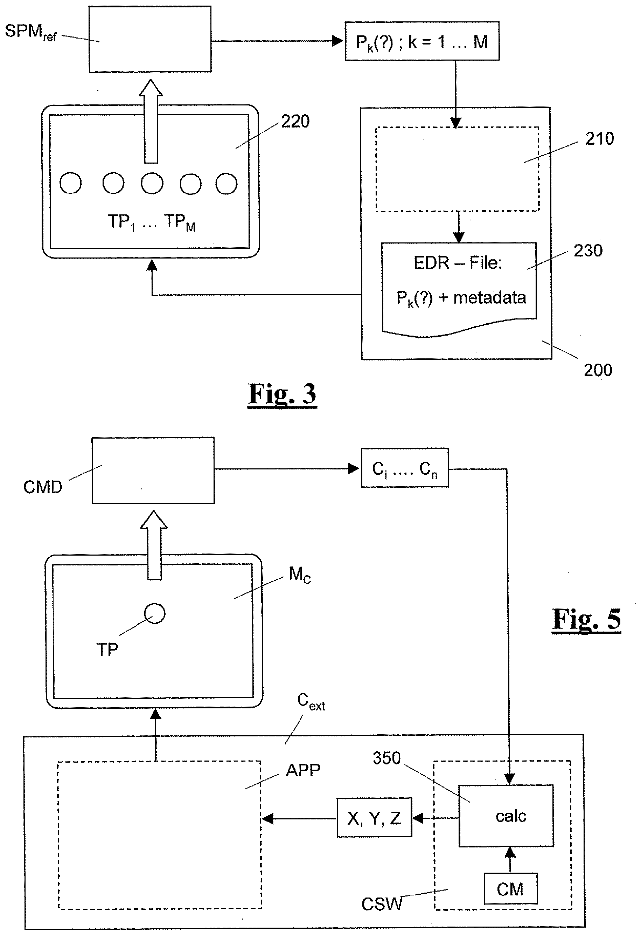

Die spektrale Charakterisierung einer Lichtquelle ist in Fig. 3 schematisch dargestellt. Die Lichtquelle ist hier durch einen Monitor 220 gebildet, der von einem Rechner 200 angesteuert wird, auf dem ein Charakterisierungsprogramm 210 läuft. In anderen Ausführungsformen kann der Monitor durch einen Signalgenerator, einen DVD-Spieler, einen im Monitor eingebauten programmierbaren Video-Einzelbildspeicher oder Video-Generator oder eine andere Video-Quelle angesteuert werden. Der Rechner 200 steuert den Monitor 220 so an, dass auf dem Monitor sequentiell M unterschiedliche Farbflecke (Patches) $TP_1$ ... $TP_M$ erzeugt werden. Als Minimum sind drei verschiedenfarbige Farbflecke erforderlich, vorzugsweise werden aber mehrere verschiedene Farbflecke erzeugt, z.B. weiss, rot, grün, blau, cyan, gelb, orange und ein paar Grautöne. Die Farbflecke werden mittels eines hochpräzisen Referenz-Spektralphotometers $SPM_{ref}$ ausgemessen, wobei M Emissions-Spektren $P_k(\lambda)$ resultieren, deren Gesamtheit im Folgenden als P bezeichnet ist. Das auf dem Rechner 200 laufende Charakterisierungsprogramm 210 legt diese M Spektren zusammen mit Meta-Daten in einem hier als EDR-File (Emissive Data Reference File) bezeichneten File ab und speichert dieses EDR-File ab. Die Meta-Daten enthalten Daten, die eine Zuordnung des EDR-Files zur charakterisierten Lichtquelle ermöglichen, z.B. Monitor-Modell, und ferner beispielsweise auch noch Erstellungsdatum, Messbedingungen, Beschreibung der Farbflecke etc. Die spektrale Charakterisierung der Lichtquellen erfolgt typischerweise beim Hersteller des Messgeräts als Dienstleistung oder beim Hersteller der Lichtquelle (z.B. des Monitors).

Vorteilhafterweise wird von allen in Frage kommenden Lichtquellen, also z.B. allen gängigen Monitor-Modellen, TV-Modellen, elektronischen Projektoren etc. ein EDR-File (inkl. Metadaten) erstellt und in einer Bibliothek bzw. Datenbank abgespeichert. In einer solchen Datenbank können auch Informationen enthalten sein, die Auskunft über vergleichbare Lichtquellen-Modelle geben, so dass die Anzahl der in der Datenbank abgelegten EDR-Files einigermassen überschaubar gehalten werden kann. Die EDR-Files werden von den Herstellern der Messgeräte, des Betriebssystems oder der Lichtquellen (Monitore, elektronische Projektoren, TV-Geräte) zur Verfügung gestellt. Die Datenbank kann jederzeit ergänzt bzw. aktualisiert werden.

Nach den vorstehend beschriebenen beiden vorbereitenden Abschnitten des erfindungsgemässen Kalibrierverfahrens liegt also für jedes zu kalibrierende Farbmessgerät ein spezifischer Satz von spektralen Farbkanals-Sensitivitäten und für jede charakterisierte Lichtquelle ein EDR-File mit einem Satz von Emissions-Spektren vor.

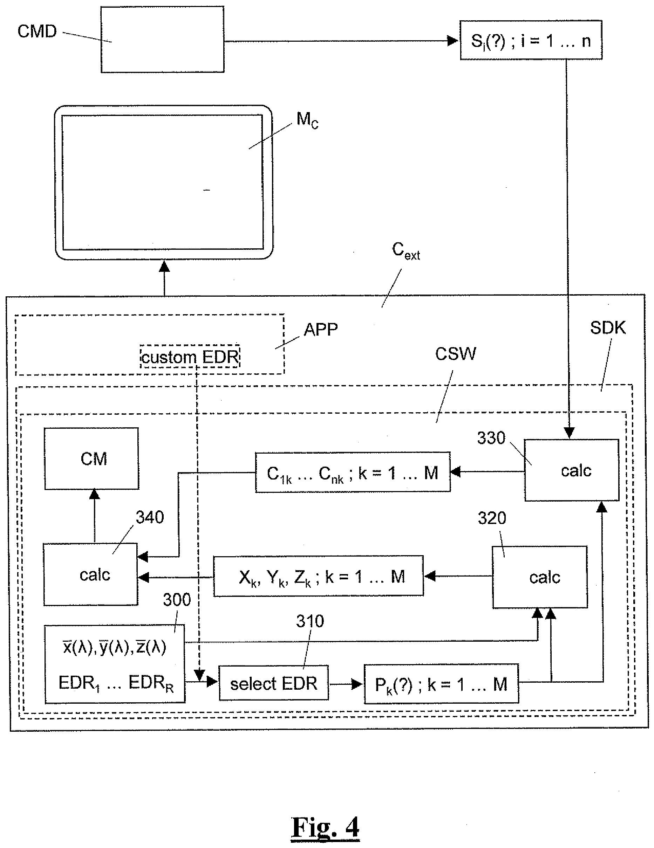

Der zentrale Teil des erfindungsgemässen Kalibrierverfahrens für ein Farbmessgerät erfolgt im dritten Abschnitt, der in Fig. 4 schematisch dargestellt ist. Dieser Abschnitt läuft gemäss einem der wichtigsten Aspekte der Erfindung beim Anwender des Farbmessgeräts CMD ab, und zwar ein Mal oder jedes Mal, wenn das Farbmessgerät in Betrieb genommen wird, d.h. nachdem es an einen externen Rechner $C_{ext}$ angeschlossen und von diesem bzw. einem darauf ausgeführten Programm erkannt wurde. In anderen Ausführungsformen können diese Funktionen im Farbmessgerät CMD oder in der Elektronik des Monitors Mc implementiert sein.

Für Messanwendungen an einem Monitor $M_C$ ist das Farbmessgerät CMD normalerweise an denjenigen Rechner $C_{ext}$ angeschlossen, der den Monitor $M_C$ steuert. Auf dem Rechner $C_{ext}$ ist ein Anwendungsprogramm APP, z.B. ein Programm zur Erzeugung eines Monitor-Profils, installiert, welches auf die vom Farbmessgerät CMD gelieferten Farbmesswerte zugreift.

Gemäss einem wichtigen Aspekt der Erfindung läuft auf dem Rechner $C_{ext}$, an den das Farbmessgerät für die gewünschte Messanwendung angeschlossen ist, auch ein in ein SDK (Software Development Kit) integriertes Kalibrierungsprogramm CSW (Calibration Software), das die einzelnen Schritte des genannten dritten Abschnitts des erfindungsgemässen Kalibrierungsverfahrens ausführt. Das Kalibrierungsprogramm CSW wird dabei vorzugsweise automatisch gestartet, wenn das Farbmessgerät an den Rechner angeschlossen und vom Rechner erkannt wurde.

Das Kalibrierungsprogramm CSW ist in der Lage, die im Farbmessgerät CMD gespeicherten individuellen spektralen Farbkanal-Sensitivitäten S einzulesen. Alternativ kann es dazu ausgebildet sein, die gerätespezifischen Sensitivitäten S aus einer Datenbank abzurufen, z.B. einer On-line-Datenbank. Das Kalibrierungsprogramm umfasst CSW ferner eine Datenbank 300 mit EDR-Files $EDR_1$ ... $EDR_R$ verschiedener Lichtquellen (beispielsweise Monitor-Modelle, TV-Modelle, Projektor-Modelle) sowie den Spektral-Daten der Color Matching Funktionen des Standard-Beobachters nach CIE 1931, also den Bewertungsspektren $\overline{x}(\lambda)$, $\overline{y}(\lambda)$, $\overline{z}(\lambda)$, oder eines anderen, ähnlichen Standard-Betrachters für die Berechnung von Tristimulus-Farbwerten X, Y, Z. Die Datenbank 300 kann auch als einfache Datei-Sammlung vorliegen. Die EDR-Files werden, wie schon erwähnt, normalerweise von den Herstellern der Lichtquellen (Monitore, TV-Geräte, Projektoren) oder dem Hersteller des Farbmessgeräts dem Entwickler des Kalibrierungsprogramms zur Verfügung gestellt. Das Kalibrierungsprogramm kann auch mit einer Funktionalität ausgestattet sein, die es erlaubt, die Datenbank 300 durch Nachladen von EDR-Files z.B. über das Internet oder von einem Datenträger zu ergänzen bzw. zu aktualisieren.

Nachdem das Farbmessgerät CMD aktiviert ist, werden die Farbkanal-Sensitivitäten S aus dem Speicher MEM des Farbmessgeräts CMD in den Rechner $C_{ext}$ übertragen, so dass sie dem Kalibrierungsprogramm CSW zur Verfügung stehen. Dann (oder vorher) wird mittels einer Selektionierroutine 310 des Kalibrierungsprogramms CSW aus der Sammlung von EDR-Files das dem eingesetzten Monitor Mc entsprechende (oder ggf. das am besten passende) EDR-File ausgewählt. Dabei wird der Monitor $M_C$ durch den Rechner $C_{ext}$ selbst identifiziert (hardware detection), und die Auswahl wird selbständig durch das Kalibrierungsprogramm CSW durchgeführt. Zusätzlich kann auch das Anwendungsprogramm APP ein spezifisches EDR-File (custom EDR) zur Verfügung stellen, das bei Bedarf ebenfalls ausgewählt werden kann. Nach der Auswahl des passenden EDR-Files stehen dem Kalibrierungsprogramm die Emissions-Spektren $P = [P_1(\lambda) \ldots P_k(\lambda) \ldots P_M(\lambda)]$ des Monitors $M_C$ bzw. allgemein der Ziel-Lichtquelle zur Verfügung, im Zusammenhang mit welcher die Kalibrierung des Farbmessgeräts CMD durchgeführt werden soll. Auf gewisse Detail-Aspekte der Auswahl des zur Ziel-Lichtquelle passenden EDR-Files wird weiter unten noch näher eingegangen.

Für die nachfolgend beschriebenen Berechnungen werden die Daten der spektralen Sensitivitäten S, der Emissions-Spektren P und der Color Matching Funktionen CMF wie folgt in Matrizenform organisiert:

$S = [S_{i,k}] = [S_k(\lambda_i)]$ mit Zeilen $i = 1 \ldots$ NSV, Spalten $k = 1 \ldots n$

$P = [P_{i,k}] = [P_i(\lambda_k)]$ mit Zeilen $i = 1 \ldots M$, Spalten $k = 1 \ldots$ NSV

$CMF = [CMF_{i,k}] = [CMF_k(\lambda_i)]$ mit Zeilen $i = 1 \ldots$ NSV, Spalten $k = 1 \ldots 3$ oder

$CMF = [CMF_{i,k}] = [\overline{x}(\lambda_i), \overline{y}(\lambda_i), \overline{z}(\lambda_i)]$ mit Zeilen $i = 1 \ldots$ NSV

Die Elemente $S_{i,k}$ der Matrix S sind die einzelnen Spektralwerte $S_k(\lambda_i)$ der spektralen Sensitivitäten der Farbkanäle k für die Wellenlängen $\lambda_i$. Die Elemente $P_{i,k}$ der Matrix P sind die einzelnen Spektralwerte $P_i(\lambda_k)$ der Emissions-Spektren der M Farbflecke i der Lichtquelle für die Wellenlängen $\lambda_k$. Die Elemente $CMF_{i,k}$ der Matrix CMF sind die einzelnen Spektralwerte $\overline{x}(\lambda_i), \overline{y}(\lambda_i), \overline{z}(\lambda_i)$ der Color Matching Funktionen für die Wellenlängen $\lambda_i$. NSV ist die Anzahl von Spektralwerten.

Unter Zugrundelegung eines Spektralbereichs von 401 - 700 nm mit einer Auflösung von 1 nm beträgt die Anzahl NSV von Spektralwerten jeweils 300. Die Wellenlängen $\lambda_i$ bzw. $\lambda_k$ laufen dann jeweils von 401 ... 700 nm. Mit anderen Spektralbereichen und Auflösungen ist die Anzahl NSV entsprechend verschieden.

Das Kalibrierungsprogramm CSW enthält drei Berechnungsroutinen 320, 330 und 340. Die Berechnungsroutine 320 multipliziert die M Emissions-Spektren $P_1(\lambda) \ldots P_k(\lambda) \ldots P_M(\lambda)$ mit den Bewertungsspektren $\overline{x}(\lambda), \overline{y}(\lambda), \overline{z}(\lambda)$, was mathematisch einer elementweisen Multiplikation der beiden vorstehend definierten Matrizen P und CMF entspricht. Das Resultat dieser Matrizenmultiplikation ist eine erste Produktmatrix P*CMF der Dimension M*3 (Zeilen, Spalten), deren Elemente M Zahlen-Tripel $X_1, Y_1, Z_1 \ldots X_k, Y_k, Z_k \ldots X_M, Y_M, Z_M$ sind. Die Berechnungsroutine 330 multipliziert die spektralen Sensitivitäten $S_1(\lambda) \ldots Si(A) \ldots S_n(\lambda)$ mit den Emissions-Spektren $P_1(\lambda) \ldots P_k(\lambda) \ldots P_M(\lambda)$, was mathematisch einer elementweisen Multiplikation der beiden vorstehend definierten Matrizen P und S entspricht. Das Resultat dieser Matrizenmultiplikation ist eine zweite Produktmatrix P*S der Dimension M*n (Zeilen, Spalten), deren Elemente n*M Werte $C_{11} \ldots C_{ik} \ldots C_{nM}$ sind. Die Berechnungsroutine 340 schliesslich bildet mit den beiden Produktmatrizen P*S und P*CMF eine Matrix-Gleichung der Form

$$P*S * CM = P*CMF \qquad \text{(Formel 1)}$$

und löst diese nach den Elementen einer Matrix CM auf, welche die Dimension n*3 (Zeilen, Spalten) besitzt, worin n die Anzahl der Farbkanäle des Farbmessgeräts ist. Das Gleichungssystem lässt sich z.B. nach der bekannten Methode des kleinsten quadratischen Fehlers auflösen. Die Matrix CM ist die zu bildende Kalibrationsmatrix und wird dann abgespeichert.

Nachdem die Kalibrationsmatrix CM gebildet ist, ist das Farbmessgerät kalibriert und für die gewünschte Anwendung einsatzbereit. Die Fig. 5 zeigt einen beispielsweisen Anwendungsfall, wobei das (kalibrierte) Farbmessgerät CMD Farbmessungen am vom Rechner $C_{ext}$ angesteuerten Monitor $M_C$ vornimmt und auf dem Rechner $C_{ext}$ ein Anwendungsprogramm APP ausgeführt wird, das einen Farbfleck TP auf dem Monitor $M_C$ darstellt. Das Farbmessgerät CMD misst den Farbfleck TP aus und erzeugt n Farbkanalausgangswerte $C_1 \ldots C_n$. Diese werden dem ebenfalls auf dem Rechner $C_{ext}$ ausgeführten Kalibrierungsprogramm CSW zugeführt und mittels einer weiteren Berechnungsroutine 350 mit der zuvor nach dem Kalibrierungsvorgang gespeicherten Kalibrationsmatrix CM multipliziert:

$$[C_1 \ldots C_n] * CM \Rightarrow [X, Y, Z] \qquad \text{(Formel 2)}$$

Als Ergebnis liegen dann die dem zugrundegelegten Standard-Beobachter entsprechenden Tristimulus-Farbwerte X, Y, Z des Farbflecks TP vor und werden dem Anwendungsprogramm APP zur Verwertung zugeführt.

In der Praxis ist es natürlich kaum machbar, jede erdenkliche Lichtquelle spektral zu charakterisieren und ein EDR-File dafür zu erstellen. Die Lichtquellen lassen sich aber nach basierender Technologie (Typ), nach Herstellern, nach Modell-Reihen etc. klassifizieren. Wenn diese Informationen in den Meta-Daten der EDR-Files enthalten sind, kann in der Datenbank ein passendes EDR-Files gefunden werden, auch wenn für die aktuelle Ziel-Lichtquelle kein spezifisches EDR-File vorhanden ist.

Wenn z.B. für ein spezifisches Lichtquellen-Modell kein EDR-File in der Datenbank vorhanden ist, dafür aber EDR-Files für mehrere andere Modelle mit gleicher zugrundeliegender Technologie (selber Typ), dann kann aus den in diesen EDR-Files enthaltenen Emissions-Spektren P1, P2, P3 .... ein kombiniertes Emissions-Spektrum PK gebildet und zur Berechnung einer Typ-spezifischen Kalibrationsmatrix CMt verwendet werden. Das kombinierte Emissions-Spektrum PK ist einfach eine grössere Matrix als die jeweiligen einzelnen Matrizen P1, P2, P3 ....:

$$PK = \begin{array}{c} [P1_{i,k}] \\ [P2_{i,k}] \\ [P3_{i,k}] \end{array}$$

und geht in derselben Weise in die Berechnung der Kalibrationsmatrix ein wie die einzelnen Matrizen P1, P2, P3 .... , also gemäss der Formel

$$PK*S * CM_t = PK*CMF \qquad \text{(Formel 3)}$$

Das Gleichungssystem lässt sich z.B. nach der bekannten Methode des kleinsten quadratischen Fehlers auflösen.

Wenn absolut keine zur Lichtquelle passenden EDR-Files in der Datenbank enthalten sind und auch kein geeignetes kombiniertes Emissions-Spektrum PK erstellbar ist, dann ist es auch möglich, ersatzweise eine generische Kalibrationsmatrix $CM_g$ nach der folgenden Formel zu berechnen, wobei diese Variante nicht von den Ansprüchen umfasst ist:

$$S * CM_g = CMF \qquad \text{(Formel 4)}$$

Diese Formel stellt ein überbestimmtes lineares Gleichungssystem mit den unbekannten Elementen der generischen Kalibrationsmatrix $CM_g$ dar. Das Gleichungssystem lässt sich z.B. nach der bekannten Methode des kleinsten quadratischen Fehlers auflösen.

Zu einem spezifischen Farbmessgerät kann es offensichtlich jeweils nur eine einzige generische Kalibrationsmatrix $CM_g$ und nur eine verhältnismässig geringe Anzahl von Typ-spezifischen Kalibrationsmatrizen $CM_t$ geben. Diese Kalibrationsmatrizen können mit Vorteil auch vorberechnet und z.B. im Kalibrationsprogramm SDK oder eventuell auch im Farbmessgerät selbst abgespeichert werden, so dass sie ggf. jeweils schneller zur Verfügung stehen.

Die wichtigsten Schritte des erfindungsgemässen Kalibrierungsverfahrens sind nachstehend nochmals in Form eines Blockschemas übersichtlich zusammengefasst:

| Bilde spektrale Datenbank aller möglichen Ziel-Lichtquellen: Monitore, TV's, Projektoren etc. | Messe die spektralen Sensitivitäten der Farbkanäle des Farbmessgeräts und speichere sie im Farbmessgerät oder in einer Datenbank ab. |

Aktiviere das Farbmessgerät mit Applikations- oder Kalibrierungsprogramm

⬇

Lade die spektralen Sensitivitäten aus dem Gerät oder der Datenbank in das Kalibrierungsprogramm

⬇

Identifiziere Modell und Typ der Ziel-Lichtquelle

⬇

Lade spektrale Daten der Ziel-Lichtquelle (Modell oder Typ) aus der spektralen Datenbank

⬇

Berechne Modell-spezifische Kalibrationsmatrix. Berechne ggf. Typ-spezifische oder allgemeine Kalibrationsmatrix oder lade gespeicherte Matrix

⬇

Berechne Tristimulus- Farbwerte neuer Messungen anhand der Kalibrationsmatrix.

Gemäss der Erfindung erfolgt die Kalibrierung des Farbmessgeräts vor dem MessEinsatz des Farbmessgeräts, und zwar das erste Mal oder jedes Mal von Neuem. Die Kalibrierung erfolgt vollautomatisch und erfordert keine spezielle Kalibrierungsgerätschaft wie einstellbare Lichtquellen oder Referenzmessgeräte. Die Kalibrationsmatrix ist stets aktuell und auf die zu messende Lichtquelle abgestimmt, so dass Messfehler minimalisiert werden. Durch die erfindungsgemässe spektrale Kalibrierung des Farbmessgeräts können Farbfilter eingesetzt werden, die sich stärker von den Bewertungsfunktionen (Color Matching Funktionen) des Standard-Beobachters nach CIE 1931 unterscheiden. Anwender können ihre Farbmessgeräte einfach an neue Lichtquellen anpassen, indem sie die Emissions-Spektren derselben nachladen.

**Patentansprüche**

1.  Kalibrierverfahren für ein Filterfarbmessgerät (CMD) mit mindestens drei Farbkanälen, das aufweist:

Bereitstellen einer zu messenden Ziel-Lichtquelle (Mc), eines Filterfarbmessgerätes (CMD) und eines Rechners ($C_{ext}$), wobei das Filterfarbmessgerät (CMD) an dem Rechner ($C_{ext}$) angeschlossen ist,
wobei die mindestens drei Farbkanäle jeweils einen Farbfilter mit unterschiedlicher spektraler Durchlässigkeit umfassen, wobei eine Kalibrationsmatrix (CM) zur Transformation von Ausgangssignalen ($C_1$ ... $C_n$) der Farbkanäle in Tristimulus-Farbwerte (X, Y, Z) gebildet wird, wobei
die Kalibrierung digital und spektral erfolgt,
die spektralen Sensitivitäten (S) der Farbkanäle des Farbmessgeräts (CMD) gemessen und abgespeichert werden, wobei die spektralen Sensitivitäten (S) die Verhältnisse der mit dem Farbmessgerät (CMD) und einem Referenz-Spektralphotometer (SPMref) gemessenen Messwerte für die jeweils selbe Wellenlänge sind, ein Emissions-Spektrum (P) einer Ziel-Lichtquelle mit dem Referenz-Spektralphotometer (SPMref) gemessen und abgespeichert wird und dieses Emissions-Spektrum (P) in die Berechnung der Kalibrierungsmatrix (CM) mit einbezogen wird,

die Kalibrationsmatrix (CM) aus den spektralen Sensitivitäten (S) und den spektralen Bewertungsfunktionen (CMF) eines Standard-Beobachters, vorzugsweise eines Standard-Beobachters nach CIE 1931 berechnet wird, und

die Kalibrationsmatrix (CM) durch Auflösung der Matrizengleichung

$$P * S * CM = P * CMF$$

nach den Elementen der Kalibrationsmatrix (CM) berechnet wird, worin P eine Matrix ist, deren Elemente die einzelnen Spektralwerte der Emissions-Spektren der Ziel-Lichtquelle für zumindest drei verschiedene Farben derselben sind, worin S eine Matrix ist, deren Elemente die einzelnen Spektralwerte der spektralen Sensitivitäten der Farbkanäle des Farbmessgeräts (CMD) sind, und worin CMF eine Matrix ist, deren Elemente die einzelnen Spektralwerte der spektralen Bewertungsfunktionen des Standard-Beobachters, vorzugsweise des Standard-Beobachters nach CIE 1931 sind, und

die Emissions-Spektren (P) einer Vielzahl von Ziel-Lichtquellen mit dem Referenz-Spektralphotometer (SPMref) gemessen und in einer Datenbank (300) in Zuordnung zu einer Modell- und/oder Typ-Information der Ziel-Lichtquellen abgespeichert werden,

**dadurch gekennzeichnet, dass**

der Rechner (Cext) die zu messende Ziel-Lichtquelle (Mc) selbst identifiziert, sodass aus der Datenbank ein dem Modell oder dem Typ der konkreten Ziel-Lichtquelle (Mc) entsprechendes Emissions-Spektrum (P) durch den Rechner (Cext) ausgewählt und für die Berechnung der Kalibrationsmatrix (CM) verwendet wird.

**2.** Verfahren nach Anspruch 1, **dadurch gekennzeichnet, dass** für verschiedene Ziel-Lichtquellen desselben Typs Emissions-Spektren (P1, P2, P3...) gemessen und abgespeichert werden, dass aus diesen Emissions-Spektren ein kombiniertes Emissions-Spektrum (PK) gebildet wird, und dass anhand dieses kombinierten Emissions-Spektrums (PK) eine Typ-spezifische Kalibrationsmatrix (CMt) berechnet wird.

**3.** Verfahren nach Anspruch 2, **dadurch gekennzeichnet, dass** die Typ-spezifische Kalibrationsmatrix (CM$_t$) durch Auflösung der Matrizengleichung

$$PK * S * CM_t = PK * CMF$$

nach den Elementen der Typ-spezifischen Kalibrationsmatrix (CM$_t$) berechnet wird, worin PK eine Matrix ist, deren Elemente die einzelnen Spektralwerte der Emissions-Spektren der einzelnen Ziel-Lichtquellen desselben Typs je für verschiedene Farben derselben sind, worin S eine Matrix ist, deren Elemente die einzelnen Spektralwerte der spektralen Sensitivitäten der Farbkanäle des Farbmessgeräts (CMD) sind, und worin CMF eine Matrix ist, deren Elemente die einzelnen Spektralwerte der spektralen Bewertungsfunktionen des Standard-Beobachters, vorzugsweise des Standard-Beobachters nach CIE 1931 sind.

**4.** Verfahren nach einem der vorangehenden Ansprüche, **dadurch gekennzeichnet, dass** die Kalibrationsmatrix (CM) jeweils unmittelbar vor dem Mess-Einsatz des Farbmessgeräts (CMD) neu berechnet wird.

**5.** Verfahren nach einem der vorangehenden Ansprüche, **dadurch gekennzeichnet, dass** die spektralen Sensitivitäten (S) der Farbkanäle des Farbmessgeräts (CMD) in einem nicht-flüchtigen Speicher (MEM) des Farbmessgeräts (CMD) oder in einer Datenbank in Zuordnung zu Identifikationsdaten des Farbmessgeräts (CMD) gespeichert und für die Berechnung der Kalibrationsmatrix (CM) aus dem Speicher (MEM) bzw. aus der Datenbank ausgelesen werden.

**Claims**

**1.** A calibration method for a filter colour measuring device (CMD) with at least three colour channels that has the following:

providing a target light source (Mc) to be measured, a filter colour measuring device (CMD), and a computer ($C_{ext}$), wherein the filter colour measuring device (CMD) is connected to the computer ($C_{ext}$),

wherein the at least three colour channels each comprise a colour filter with different spectral transmittance, wherein a calibration matrix (CM) is formed for transforming output signals ($C_1...C_n$) of the colour channels into tristimulus colour values (X, Y, Z), wherein

the calibration is done digitally and spectrally,

the spectral sensitivities (S) of the colour channels of the colour measuring device (CMD) are measured and stored, wherein the spectral sensitivities (S) are the ratios of the measured values measured with the colour measuring device (CMD) and a reference spectrophotometer (SPMref) for the same wavelength in each case,

an emission spectrum (P) of a target light source is measured and stored with the reference spectrophotometer (SPMref), and this emission spectrum (P) is included in the calculation of the calibration matrix (CM),

the calibration matrix (CM) is calculated from the spectral sensitivities (S) and the spectral evaluation functions (CMF) of a standard observer, preferably a standard observer according to CIE 1931, and

the calibration matrix (CM) is calculated by solving the matrix equation

$$P*S*CM \;=\; P*\;CMF$$

according to the elements of the calibration matrix (CM), where P is a matrix the elements of which are the individual spectral values of the emission spectra of the target light source for at least three different colours of same, where S is a matrix the elements of which are the individual spectral values of the spectral sensitivities of the colour channels of the colour measuring device (CMD), and where CMF is a matrix the elements of which are the individual spectral values of the spectral evaluation functions of the standard observer, preferably the standard observer according to CIE 1931, and

the emission spectra (P) of a plurality of target light sources are measured with the reference spectrophotometer (SPMref) and stored in a database (300) in association with model and/or type information of the target light sources, **characterized in that**

the computer (Cext) itself identifies the target light source (Mc) to be measured, so that an emission spectrum (P) corresponding to the model or type of the specific target light source (Mc) is selected from the database by the computer (Cext) and used for the calculation of the calibration matrix (CM).

2. The method according to claim 1, **characterized in that** emission spectra (P1, P2, P3...) are measured and stored for different target light sources of the same type, **in that** a combined emission spectrum (PK) is formed from these emission spectra, and **in that** a type-specific calibration matrix ($CM_t$) is calculated on the basis of this combined emission spectrum (PK).

3. The method according to claim 2, **characterized in that** the type-specific calibration matrix ($CM_t$) is calculated by solving the matrix equation

$$P*S*CM_t \;=\; PK*\;CMF$$

according to the elements of the type-specific calibration matrix ($CM_t$) , where PK is a matrix the elements of which are the individual spectral values of the emission spectra of the individual target light sources of the same type for different respective colours of same, where S is a matrix the elements of which are the individual spectral values of the spectral sensitivities of the colour channels of the colour measuring device (CMD), and where CMF is a matrix the elements of which are the individual spectral values of the spectral evaluation functions of the standard observer, preferably the standard observer according to CIE 1931.

4. The method according to any of the preceding claims, **characterized in that** the calibration matrix (CM) is recalculated in each case immediately before the measuring use of the colour measuring device (CMD).

5. The method according to any of the preceding claims, **characterized in that** the spectral sensitivities (S) of the colour channels of the colour measuring device (CMD) are stored in a non-volatile memory (MEM) of the colour measuring device (CMD) or in a database in association with identification data of the colour measuring device (CMD) and read out from the memory (MEM) or from the database for the calculation of the calibration matrix (CM).

**Revendications**

1. Procédé de calibrage pour un colorimètre à filtre (CMD) avec au moins trois canaux de couleur comprenant :

   la fourniture d'une source lumineuse cible (Mc) à mesurer, un colorimètre à filtre (CMD) et un ordinateur ($C_{ext}$), dans lequel le colorimètre à filtre (CMD) est relié à l'ordinateur ($C_{ext}$),
   dans lequel les au moins trois canaux de couleur comprennent chacun un filtre de couleur avec une transmission spectrale différente, dans lequel une matrice de calibrage (CM) est formée pour transformer les signaux de sortie ($C_i... C_n$) des canaux de couleur en valeurs de couleur tristimulus (X, Y, Z), dans lequel le calibrage se fait numériquement et spectralement,
   les sensibilités spectrales (S) des canaux de couleur du colorimètre (CMD) sont mesurées et stockées, dans lequel les sensibilités spectrales (S) sont les rapports des valeurs de mesures mesurées avec le colorimètre (CMD) et un spectrophotomètre de référence (SPMref) pour la même longueur d'onde chacun,
   un spectre d'émission (P) d'une source lumineuse cible est mesuré avec le spectrophotomètre de référence (SPMref) et enregistré et ce spectre d'émission (P) est intégré dans le calcul de la matrice de calibrage (CM),
   la matrice de calibrage (CM) est calculée à partir des sensibilités spectrales (S) et des fonctions de pondération spectrales (CMF) d'un observateur standard, de préférence un observateur standard selon CIE 1931, et
   la matrice de calibrage (CM) est calculée en résolvant l'équation matricielle

$$P*S*CM=P* \ CMF$$

   en fonction des éléments de la matrice de calibrage (CM), où P est une matrice dont les éléments sont les valeurs spectrales individuelles des spectres d'émission de la source lumineuse cible pour au moins trois couleurs différentes de la même, où S est une matrice dont les éléments sont les valeurs spectrales individuelles des sensibilités spectrales des canaux de couleur du colorimètre (CMD), et où CMF est une matrice dont les éléments sont les valeurs spectrales individuelles des fonctions de pondération spectrales de l'observateur standard, de préférence l'observateur standard selon CIE 1931, et
   les spectres d'émission (P) d'un grand nombre de sources lumineuses cibles sont mesurés avec le spectrophotomètre de référence (SPMref) et stockés dans une base de données (300) en association avec un modèle et/ou un type d'information des sources lumineuses cibles,
   **caractérisé en ce que**
   l'ordinateur (Cext) identifie lui-même la source lumineuse cible (Mc) à mesurer, de sorte qu'un spectre d'émission (P) correspondant au modèle ou au type de la source lumineuse cible (Mc) spécifique est sélectionné dans la base de données par l'ordinateur (Cext) et sert au calcul de la matrice de calibrage (CM) .

2. Procédé selon la revendication 1, **caractérisé en ce que** des spectres d'émission (P1, P2, P3...) sont mesurés et stockés pour différentes sources lumineuses cibles de même type, qu'un spectre d'émission combiné (PK) est formé à partir de ces spectres d'émission, et qu'une matrice de calibrage spécifique au type($CM_t$) est calculée sur la base de ce spectre d'émission combiné (PK).

3. Procédé selon la revendication 2, **caractérisé en ce que** la matrice de calibrage spécifique au type($CM_t$) est calculée en résolvant l'équation matricielle

$$P*S*CM_t \ = \ PK* \ CMF$$

   en fonction des éléments de la matrice de calibrage spécifique au type ($CM_t$) , où PK est une matrice dont les éléments sont les valeurs spectrales individuelles des spectres d'émission des sources lumineuses cibles individuelles du même type pour au moins trois couleurs différentes de la même, où S est une matrice dont les éléments sont les valeurs spectrales individuelles des sensibilités spectrales des canaux de couleur du colorimètre (CMD), et où CMF est une matrice dont les éléments sont les valeurs spectrales individuelles des fonctions de pondération spectrales de l'observateur standard, de préférence l'observateur standard selon CIE 1931.

4. Procédé selon l'une des revendications précédentes, **caractérisé en ce que** la matrice de calibrage (CM) est recalculée chaque fois immédiatement avant la mesure du colorimètre (CMD).

5. Procédé selon l'une quelconque des revendications précédentes, **caractérisé en ce que** les sensibilités spectrales (S) des canaux de couleur du colorimètre (CMD) sont stockées dans une mémoire non volatile (MEM) du colorimètre (CMD) ou dans une base de données en association avec des données d'identification du colorimètre (CMD) et lues depuis la mémoire (MEM) ou depuis la base de données pour le calcul de la matrice de calibrage (CM).

**Fig. 1**

**Fig. 2**

$SPM_{ref}$

$P_k(?) ; k = 1 \ldots M$

220

$TP_1 \ldots TP_M$

210

EDR – File:

$P_k(?)$ + metadata

230

200

**Fig. 3**

CMD

$C_i \ldots C_n$

$M_C$

**Fig. 5**

TP

$C_{ext}$

APP

350

X, Y, Z

calc

CM

CSW

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7671991 B
- EP 1845350 B1
- US 20090141042 A1
- US 3804531 A

**In der Beschreibung aufgeführte Nicht-Patentliteratur**

- **ZSOLT T. KOSZTYÄN et al.** Matrix-based color measurement corrections of tristimulus colorimeters. *Applied Optics,* 2010, vol. 49 (12), 2288-2301